Europäisches Patentamt

European Patent Office

Office européen des brevets

(11) Veröffentlichungsnummer : **0 035 700**
**B1**

(12) **EUROPÄISCHE PATENTSCHRIFT**

(45) Veröffentlichungstag der Patentschrift :
14.09.83

(21) Anmeldenummer : 81101390.3

(22) Anmeldetag : 26.02.81

(51) Int. Cl.³ : **G 01 D 5/24**

(54) **Digitale elektrische Winkelmesseinrichtung.**

(30) Priorität : 05.03.80 DE 3008396

(43) Veröffentlichungstag der Anmeldung :
16.09.81 Patentblatt 81/37

(45) Bekanntmachung des Hinweises auf die Patenterteilung : 14.09.83 Patentblatt 83/37

(84) Benannte Vertragsstaaten :
AT CH FR GB IT LI NL SE

(56) Entgegenhaltungen :
DE B 2 306 752
GB A 737 489
GB A 870 158
GB A 946 772
US A 3 652 972

(73) Patentinhaber : **Dr. Johannes Heidenhain GmbH**
**Nansenstrasse 17**
**D-8225 Traunreut (DE)**

(72) Erfinder : **Ernst, Alfons, Dipl.-Ing.**
**Traunring 62**
**D-8225 Traunreut (DE)**
Erfinder : **Kober, Hans-Rudolf, Dipl.-Ing.**
**Breslauer Strasse 2**
**D-8225 Traunreut (DE)**

Digitale elektrische Winkelmeßeinrichtung

Die Erfindung bezieht sich auf eine digitale elektrische Winkelmeßeinrichtung nach dem Oberbegriff des Anspruches 1.

Derartige Winkelmeßeinrichtungen sind bereits bekannt. In der DE-PS 23 06 752 ist beispielsweise eine kapazitiv arbeitende Längen- oder Winkelmeßeinrichtung beschrieben, bei der über einen festen Kontakt der Meßeinrichtung Spannung zugeführt wird und über einen Schleifkontakt eine von der Messung abhängige Ausgangsspannung abgegriffen wird. Die Spannungszuführung und der Spannungsabgriff erfolgt dabei jeweils über die Außenbereiche der relativ beweglichen Bauteile.

Ferner sind aus der Firmendruckschrift « Inductosyn » der Dr. Johannes Heidenhain GmbH vom Juli 1978 induktive Winkelmeßeinrichtungen der verschiedensten Bauformen bekannt, z. B. : « Schleppkabelausführungen » für begrenzte Drehwinkel von Rotor und Stator, « Schleifringausführungen » mit externer Zuführung und externem Abgriff sowie « Trafoausführungen » mit innenliegendem Transformator zur Übertragung der Meßspannung.

In der DE-AS 12 67 433 ist ebenfalls eine induktive Meßeinrichtung in « Trafoausführung » beschrieben, in der auf die Nachteile von Schleifringen und Bürsten verwiesen wird, ohne diese explizit zu beschreiben.

Diese Nachteile bestehen vor allem in der aufwendigen Anbauweise, die gesonderte Montageelemente erfordet sowie in dem Justieraufwand der — am Einsatzort während der Montage, lagerichtig zu den Schleifringen — erforderlich ist. Des weiteren ist durch die Anbringung der Kontakte und der Schleifringe an der Rotorrückseite ein größerer Einbauraum notwendig, als bei der « Schleppkabel- » und « Trafoversion ».

Der Erfindung liegt die Aufgabe zugrunde, die bekannten Nachteile der Schleifringausführung zu beseitigen, ohne jedoch die Nachteile der Trafoausführung (geringer Übertragungsfaktor) in Kauf nehmen zu müssen.

Erfindungsgemäß wird diese Aufgabe durch die im Kennzeichen des Anspruches 1 angegebenen Maßnahmen gelöst.

Die Unteransprüche geben die vorteilhafte Ausgestaltung der Erfindung an, wobei die Vorteile darin bestehen, daß der Raumbedarf für die Meßeinrichtung nicht größer ist, als bei der Trafoausführung ; die Schleifringe und die Kontaktbürsten erfordern keinen zusätzlichen Montage- und Justieraufwand ; die Schleifringe und die Kontaktbürsten sind durch die Lage im Inneren der Meßeinrichtung vor Verschmutzung und Beschädigung geschützt.

Mit Hilfe der Zeichnungen soll die Erfindung anhand eines Ausführungsbeispiels erläutert und der Stand der Technik dargestellt werden.

Es zeigen

Figur 1a eine induktive Meßeinrichtung in Schleppkabelausführung als Stand der Technik im Schnitt,

Figur 1b eine induktive Meßeinrichtung in Trafoausführung als Stand der Technik im Schnitt,

Figur 1c eine induktive Meßeinrichtung in Schleifringausführung als Stand der Technik im Schnitt,

Figur 2 einen Teilschnitt durch eine Meßeinrichtung in erfindungsgemäßer Bauform,

Figur 2a ein vergrößert dargestellter Ausschnitt der Meßeinrichtung nach Figur 2,

Figur 3 eine Draufsicht auf einen Ring mit Mehrfachkontaktfedern,

Figur 3a eine Seitenansicht auf einen Kontaktfederring nach Figur 3 im Schnittverlauf X-X.

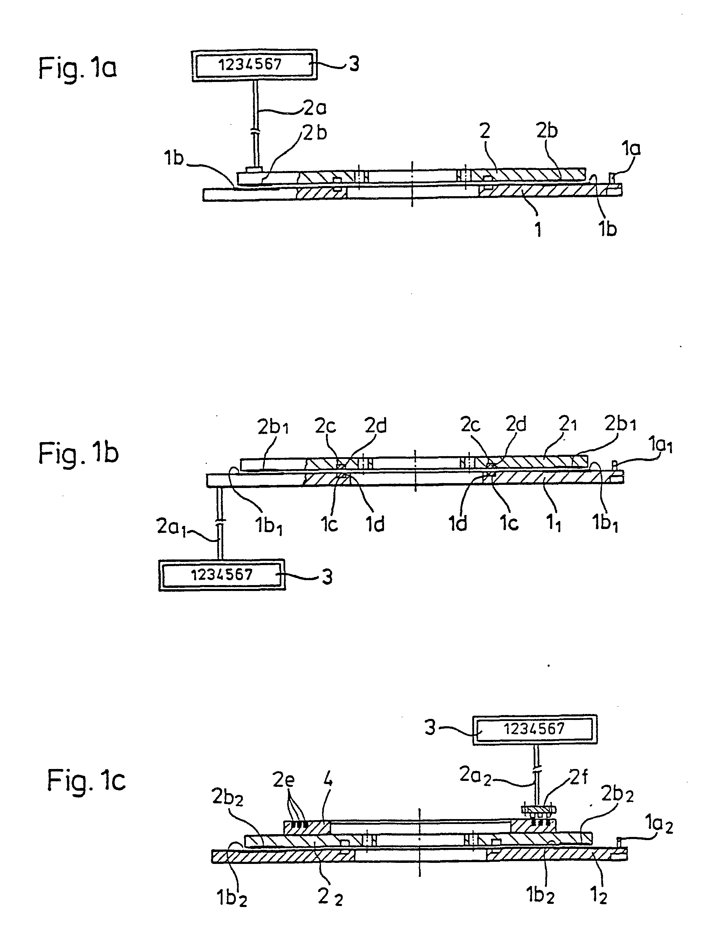

In der Figur 1a ist als Stand der Technik eine induktive Winkelmeßeinrichtung in Schleppkabelausführung gezeigt. Eine Versorgungsspannung für einen Stator 1, dem ein Rotor 2 koaxial gegenüberliegt, wird an Klemmen 1a angelegt. Aufgrund von elektrisch leitfähigen Rastern 1b und 2b wird im Raster 2b eine Spannung induziert, deren Verlauf ein Maß für eine Relativbewegung zwischen Stator 1 und Rotor 2 darstellt und die durch ein Schleppkabel 2a aus dem Rotor 2 herausgeführt wird. Dieses Kabel 2a ist an einer Auswertebaueinheit 3 angeschlossen, die den überstrichenen Winkel digital anzeigt. Es ist durch die Bauweise mit Schleppkabel 2a bedingt, daß der relative Drehwinkel zwischen Stator 1 und Rotor 2 kleiner als 360° sein muß, da sonst das Schleppkabel 2a verdreht würde.

Um auch Winkel von mehr als 360° digital messen zu können, sind die Meßeinrichtungen gemäß der Figuren 1b und 1c vorgesehen. Bei der Ausführung gemäß Figur 1b sind im Stator $1_1$ sowie im Rotor $2_1$ Nuten 1c und 2c vorgesehen, in denen jeweils eine Transformatorwicklung 1d, 2d eingebracht ist. Bei dieser Ausführung ist die Versorgungsspannung an einen Anschluß $1a_1$ angelegt, um von dort in ein elektrisch leitendes Raster $1b_1$ zu gelangen.

Auch hier wird im elektrisch leitenden Raster $2b_1$ des Rotors $2_1$ eine Meßspannung induziert. Mit diesem Raster $2b_1$ ist die Transformatorwicklung 2d verbunden, die in der Nut 2c des Rotors $2_1$ eingebettet und vergossen ist. Der Transformatorwicklung 2d liegt in geringem Abstand die zweite Transformatorwicklung 1d gegenüber, die in einer Nut 1c des Stators $1_1$ eingebettet und vergossen ist. Über diesen Transformator 1d, 2d wird die Meßspannung vom Rotor $2_1$ in den Stator $1_1$ übertragen und von der Transformatorwicklung 1d zum Rotoranschluß $2a_1$ — der sich jedoch im Stator $1_1$ befindet — geführt, der mit einer Auswerteeinheit — wie in Figur 1a — verbunden ist. Durch diese Maßnahmen kann der Rotor $2_1$ beliebig viele Umdrehungen machen. Die Kabel sind alle statorseitig angebracht. Die hier beschriebene Ausführung benötigt den geringsten Einbauraum und ist sehr wenig störanfällig, jedoch ist durch die Transformation der Meßspannung der Übertragungsfaktor wesentlich geringer, als bei anderen Ausführungsarten.

In der Figur 1c ist eine Bauform mit Schleifringen 2e und Bürsten 2f dargestellt, bei der eine beliebig hohe Anzahl von Rotorumdrehungen zulässig ist, ohne daß der geringe Übertragungsfaktor der Trafoausführung berücksichtigt werden muß. An einem Kontakt $1a_2$ befindet sich der Anschluß für die Versorgungsspannung. Wie bei den Ausführungen gemäß der Figuren 1a und 1b wird mittels elektrisch leitender Raster $1b_2$ und $2b_2$ eine Meßspannung erzeugt. In einem Adapterring 4 an der Rückseite des Rotors $2_2$ sind die Schleifringe 2e eingebracht, denen die Meßspannung zugeführt wird. Der Abgriff der Meßspannung erfolgt mittels Bürsten 2f, die auf den Schleifringen 2e unter Federeinwirkung aufliegen. Die Anbringung dieser Bürsten 2f erfolgt durch den Anwender, so daß die Montage und Justierung der Bürsten 2f in einem separaten Halter an die Schleifringe 2e erst am Einsatzort vorgenommen werden kann. Der Einbauraum für diese Ausführung muß größer sein als bei den vorbeschriebenen Versionen. Die Gefahr der Beschädigung und Verschmutzung der Kontakte ist durch deren exponierte Lage relativ hoch.

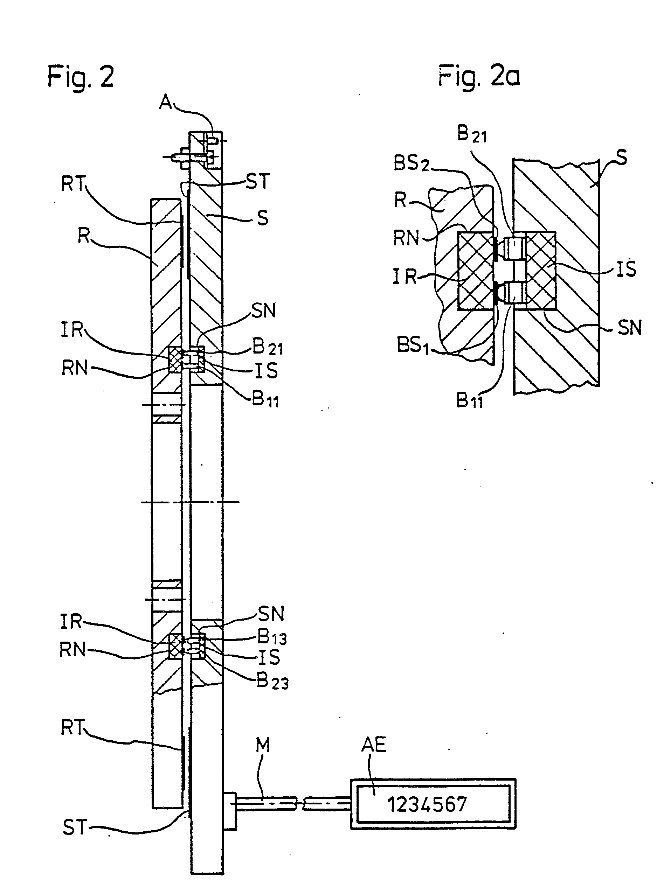

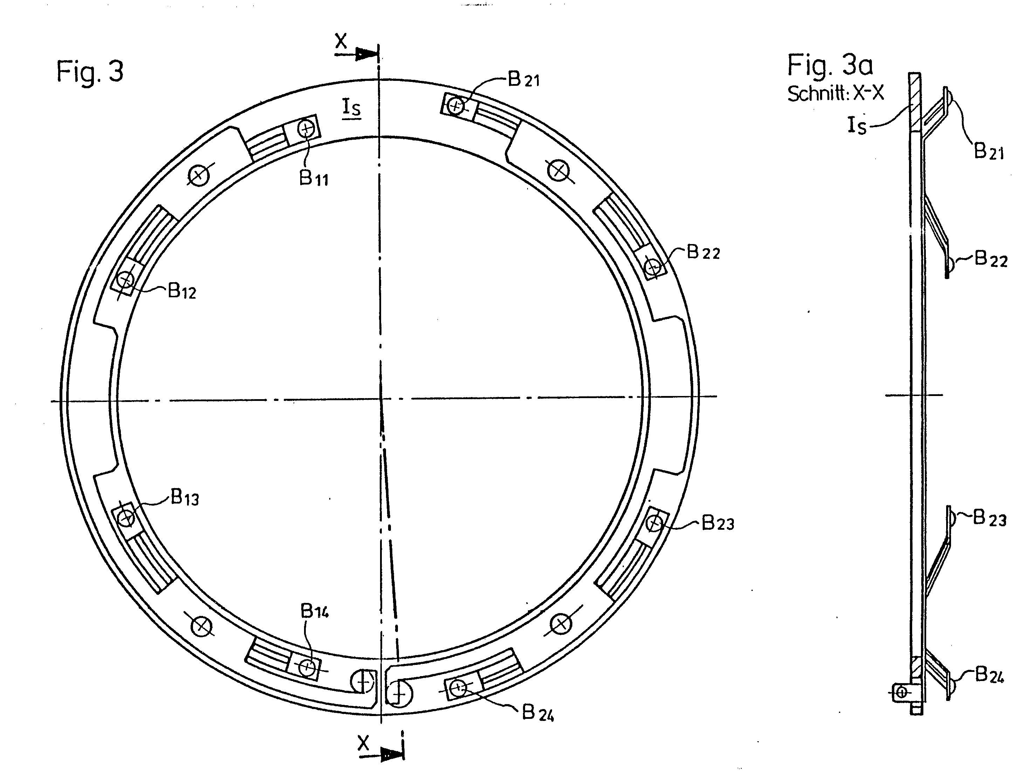

In der Figur 2 ist die erfindungsgemäße Ausführung schematisch dargestellt. Ein Stator S weist an seinem Außenbereich einen Anschlußkontakt A für eine Versorgungsleitung auf, über die eine Statorteilung ST mit Spannung versorgt wird. In einer koaxialen Nut SN ist ein Isolierring IS befestigt. Der Isolierring IS, der auch in den Figuren 3 und 3a dargestellt ist, trägt Bürsten $B_{11}$ bis $B_{24}$, die als Kontaktfedern ausgebildet sind. Zur Erhöhung der Kontaktsicherheit sind pro Schleifringbahn vier Kontaktbürsten $B_{11}$ bis $B_{24}$ unterschiedlicher Länge vorgesehen. Dem Stator S liegt mit einem geringen Luftspalt ein Rotor R gegenüber, der lagerichtig zur Statornut SN ebenfalls eine Nut RN aufweist. In der Rotornut RN sind auf einem Isolierring IR Schleifringbahnen $BS_1$ und $BS_2$ angeordnet. Der Luftspalt zwischen Stator S und Rotor R ist so auf die Kontaktfederlängen abgestimmt, daß die Kontaktbürsten $B_{11}$, $B_{12}$, $B_{13}$, $B_{14}$, $B_{21}$, $B_{22}$, $B_{23}$ und $B_{24}$ ständig mit den Schleifringbahnen $BS_1$ und $BS_2$ in Berührung stehen. Durch die Mehrfachkontaktierung ist gewährleistet, daß auch bei mangelhaftem Kontakt einer Kontaktbürste die Übertragung einer Spannung fehlerfrei erfolgen kann, was durch die unterschiedliche Fehlerkonstante aufgrund der verschiedenen Längen noch begünstigt wird.

Die Schleifringbahnen $BS_1$ und $BS_2$ stehen mit einem elektrisch leitfähigen Raster in Form einer Rotorteilung RT in Verbindung. In der Rotorteilung RT wird, wie bereits beschrieben, eine Meßspannung induziert, zu den Schleifringbahnen $BS_1$ und $BS_2$ geleitet, dort von den Kontaktbürsten $B_{11}$ und $B_{24}$ abgegriffen und über einen Anschluß M einer Auswertebaueinheit AE zugeführt, in der die digitale Anzeige oder eine beliebige andere Auswertung erfolgen kann.

Durch die Anordnung der Übertragungselemente $B_{11}$, $B_{12}$, $B_{13}$, $B_{14}$, $B_{21}$, $B_{22}$, $B_{23}$, $B_{24}$, $BS_1$ und $BS_2$ zwischen dem Stator S und dem Rotor R ist eine Beschädigung und Verschmutzung der genannten Übertragungselemente nahezu ausgeschlossen. Der erforderliche Einbauraum ist nicht größer als bei anderen Bauformen, der Übertragungsfaktor jedoch größer als bei der Trafoausführung und der zulässige Drehwinkel beliebig.

Durch die erfindungsgemäße Anordnung der Schleifringe $BS_1$ und $BS_2$ und der Kontaktbürsten $B_{11}$ bis $B_{24}$ in den koaxialen Nuten SN und RN des Stators S und des Rotors R ist für alle drei Bauformen (Schleppkabel-, Trafo- und Schleifringversion) eine einheitliche Lagerhaltung für die Statoren S und Rotoren R möglich, da die Transformatorennuten auch zur Aufnahme der Isolierringe IS und IR für die Kontaktbürsten $B_{11}$ bis $B_{24}$ und die Schleifringe $BS_1$ und $BS_2$ geeignet sind.

Besonders wirtschaftliche Ergebnisse werden erzielt, wenn die Kontaktbürsten als Stanz-Biegeteil ausgeführt werden. Ist die erforderliche Stückzahl zu gering für die dazu erforderlichen hohen Werkzeugkosten, sind sehr gute Ergebnisse durch die Herstellung im Ätz-Biegeverfahren zu erzielen.

Die Herstellung der Schleifringe $BS_1$ und $BS_2$ erfolgt vorzugsweise in Leiterplattenätztechnik.

**Ansprüche**

1. Digitale elektrische Winkelmeßeinrichtung mit zwei relativ zueinander beweglichen Bauteilen — in Form eines Stators und eines Rotors — die jeweils elektrisch leitfähige Raster als Meßteilung bzw. Abtastfeld aufweisen, die sich mit geringem Luftspalt koaxial gegenüberliegen, wobei die Versorgungsspannung einem der beiden leitfähigen Raster zugeführt und die in dem anderen leitfähigen Raster erzeugte Meßspannung über Schleifringe und Bürsten entnommen wird, dadurch gekennzeichnet, daß die Schleifringe ($BS_1$, $BS_2$) und die Bürsten ($B_{11}$, $B_{12}$, $B_{13}$, $B_{14}$, $B_{21}$, $B_{22}$, $B_{23}$, $B_{24}$) jeweils rasterseitig koaxial an den relativ zueinander beweglichen Bauteilen (S, R) angeordnet sind.

2. Digitale elektrische Winkelmeßeinrichtung nach Anspruch 1, dadurch gekennzeichnet, daß die Schleifringe ($BS_1$, $BS_2$) auf der Oberfläche des Rotors (R) oder des Stators (S) und die Bürsten ($B_{11}$ bis $B_{24}$) in einer koaxialen Nut (SN oder RN) im Stator (S) oder im Rotor (R) angeordnet sind.

3. Digitale elektrische Winkelmeßeinrichtung nach Anspruch 1, dadurch gekennzeichnet, daß die Schleifringe ($BS_1$, $BS_2$) in einer koaxialen Nut (RN) im Rotor (R) und die Bürsten ($B_{11}$ bis $B_{24}$) in einer koaxialen Nut (SN) im Stator (S) angeordnet sind.

4. Digitale elektrische Winkelmeßeinrichtung nach Anspruch 1, dadurch gekennzeichnet, daß die Schleifringe ($BS_1$, $BS_2$) in einer koaxialen Nut (SN) im Stator (S) und die Bürsten ($B_{11}$ bis $B_{24}$)

in einer koaxialen Nut (RN) im Rotor (R) angeordnet sind.

5. Digitale elektrische Winkelmeßeinrichtung nach Anspruch 1, dadurch gekennzeichnet, daß die Bürsten ($B_{11}$ bis $B_{24}$) als Mehrfachkontaktfedern ausgeführt sind.

6. Digitale elektrische Winkelmeßeinrichtung nach Anspruch 5, dadurch gekennzeichnet, daß die Kontaktfedern ($B_{11}$ bis $B_{24}$) unterschiedliche Längen aufweisen.

7. Digitale elektrische Winkelmeßeinrichtung nach Anspruch 5 und 6, dadurch gekennzeichnet, daß die Mehrfachkontaktfedern ($B_{11}$ bis $B_{24}$) im Ätz-Biegeverfahren oder im Stanz-Biegeverfahren hergestellt sind.

8. Digitale elektrische Winkelmeßeinrichtung nach Anspruch 1, dadurch gekennzeichnet, daß die Schleifringe ($BS_1$ und $BS_2$) in Leiterplattenätztechnik ausgeführt sind.

## Claims

1. A digital electric angle-measuring device, having two components — in the form of a stator and of a rotor — which are movable in relation to each other and which in each case are provided with electrically conductive grids serving as a measuring scale or sampling field and being located coaxially opposite to each other with a small air gap, the supply voltage being fed to one of the two conductive grids and the measurement voltage generated in the other conductive grid being fed out via slip rings and brushes, characterised in that the slip rings ($BS_1$, $BS_2$) and the brushes ($B_{11}$, $B_{12}$, $B_{13}$, $B_{14}$, $B_{21}$, $B_{22}$, $B_{23}$, $B_{24}$) are in each case coaxially arranged at the grid side of the components (S, R) which can be moved in relation to one another.

2. A digital electric angle-measuring device according to Claim 1, characterised in that the slip rings ($BS_1$, $BS_2$) are arranged on the surface of the rotor (R) or of the stator (S) and the brushes ($B_{11}$ to $B_{24}$) are arranged in a coaxial slot (SN or RN) in the stator (S) or in the rotor (R).

3. A digital electric angle-measuring device according to Claim 1, characterised in that the slip rings ($BS_1$, $BS_2$) are arranged in a coaxial slot (RN) in the rotor (R) and the brushes ($B_{11}$ to $B_{24}$) are arranged in a coaxial slot (SN) in the stator (S).

4. A digital electric angle-measuring device according to Claim 1, characterised in that the slip rings ($BS_1$, $BS_2$) are arranged in a coaxial slot (SN) in the stator (S) and the brushes ($B_{11}$ to $B_{24}$) are arranged in a coaxial slot (RN) in the rotor (R).

5. A digital electric angle-measuring device according to Claim 1, characterised in that the brushes ($B_{11}$ to $B_{24}$) are constructed as multiple contact springs.

6. A digital electric angle-measuring device according to Claim 5, characterised in that the contact springs ($B_{11}$ to $B_{24}$) have different lengths.

7. A digital electric angle-measuring device according to Claim 5 and 6, characterised in that the multiple contact springs ($B_{11}$ to $B_{24}$) are produced by the etching/bending method or by the punching/bending method.

8. A digital electric angle-measuring device according to Claim 1, characterised in that the slip rings ($BS_1$ and $BS_2$) are produced by means of the printed circuit board etching method.

## Revendications

1. Mesureur d'angles électrique numérique comportant deux éléments mobiles l'un par rapport à l'autre, ayant la forme d'un stator et d'un rotor, qui présentent chacun des trames conductrices de l'électricité à titre de graduations de mesure ou de champ d'analyse, qui sont opposées coaxialement l'une à l'autre et séparées par un petit espace d'air, la tension d'alimentation étant fournie à une des deux trames conductrices et la tension de mesure produite dans l'autre trame conductrice étant captée au moyen de bagues collectrices et de balais, caractérisé en ce que les bagues collectrices ($BS_1$, $BS_2$) et les balais ($B_{11}$, $B_{12}$, $B_{13}$, $B_{14}$, $B_{21}$, $B_{22}$, $B_{23}$, $B_{24}$) sont disposés chaque fois du côté trame coaxialement aux éléments mobiles l'un par rapport à l'autre (S, R).

2. Mesureur d'angles électrique numérique suivant la revendication 1, caractérisé en ce que les bagues collectrices ($BS_1$, $BS_2$) sont disposées sur la surface du rotor (R) ou du stator (S) et les balais ($B_{11}$ à $B_{24}$) sont disposés dans une rainure coaxiale (SN ou RN) ménagée dans le stator (S) ou dans le rotor (R).

3. Mesureur d'angles électrique numérique suivant la revendication 1, caractérisé en ce que les bagues collectrices ($BS_1$, $BS_2$) sont disposées dans une rainure coaxiale (RN) dans le rotor (R) et les balais ($B_{11}$ à $B_{24}$) sont disposés dans une rainure coaxiale (SN) dans le stator (S).

4. Mesureur d'angles électrique numérique suivant la revendication 1, caractérisé en ce que les bagues collectrices ($BS_1$, $BS_2$) sont disposées dans une rainure coaxiale (SN) dans le stator (S) et les balais ($B_{11}$ à $B_{24}$) dans une rainure coaxiale (RN) dans le rotor (R).

5. Mesureur d'angles électrique numérique suivant la revendication 1, caractérisé en ce que les balais ($B_{11}$ à $B_{24}$) ont la forme de ressorts à contacts multiples.

6. Mesureur d'angles électrique numérique suivant la revendication 5, caractérisé en ce que les ressorts de contact ($B_{11}$ à $B_{24}$) ont des longueurs différentes.

7. Mesureur d'angles électrique numérique suivant les revendications 5 et 6, caractérisé en ce que les ressorts à contacts multiples ($B_{11}$ à $B_{24}$) sont fabriqués par un procédé de cintrage par morsure chimique ou par un procédé de cintrage par estampage.

8. Mesureur d'angles électrique numérique suivant la revendication 1, caractérisé en ce que les bagues collectrices ($BS_1$ et $BS_2$) sont réalisées par la technique de morsure chimique des plaques à circuits imprimés.

Fig. 1a

Fig. 1b

Fig. 1c

1

# Fig. 2

A

RT

R

ST

S

IR

SN

RN

B₂₁

IS

B₁₁

SN

IR

B₁₃

RN

IS

B₂₃

RT

M

AE

ST

1234567

# Fig. 2a

B₂₁

BS₂

R

S

RN

IR

IS

BS₁

SN

B₁₁

Fig. 3

X

$I_S$

$B_{21}$

$B_{11}$

$B_{12}$

$B_{22}$

$B_{13}$

$B_{23}$

$B_{14}$

$B_{24}$

X

Fig. 3a
Schnitt: X-X

$I_S$

$B_{21}$

$B_{22}$

$B_{23}$

$B_{24}$

0 035 700